# EUROPEAN PATENT APPLICATION

(11) **EP 3 189 890 A1**
(43) Date of publication of application: **12.07.2017**
(21) Application number: 16198736.7
(22) Date of filing: 14.11.2016
(51) Int. Cl.: B01F 15/00, F16J 13/08, F16J 13/18, B28C 5/42

(54) **DRUM ACCESS DOOR**

(30) Priority: 07.01.2016 GB 201600288; 09.08.2016 GB 201613703
(71) Applicant: Hymix Ltd, Telford, Shropshire TF3 3AY (GB)
(72) Inventor: Humpish, Nick, Telford, shropshire TF3 3AY (GB)
(74) Representative: Wynne-Jones, Lainé and James LLP

(57) **Abstract**

An access entry closure assembly for a drum of a concrete mixer or agitator, comprising a door member (90) and an insert (92), the door member comprising a plate (100) having mounted thereon a latching mechanism comprising a plurality of locking arms (110). Each locking arm is coupled, at a proximal end, to an actuating member (106) and extends substantially radially outwardly toward an edge of said plate (100). A distal end of each locking arm extends beyond the peripheral edge of said plate when in a locking position. The actuating member (106) is arranged and configured, when actuated, to cause linear movement of said locking arms (110) in a direction away from said edge of said plate so as to retract said distal ends thereof, each locking arm being retained in a retaining member (112) defining a slot through which a respective locking arm extends. Each retaining member (112) is provided on said plate and includes a biasing member (114) configured to engage a respective locking arm retained therein and bias said respective locking arm toward said plate.

## Description

This invention relates generally to an access door or cover and, more particularly to a drum access door or cover for a drum of an in-transit mixer or agitator.

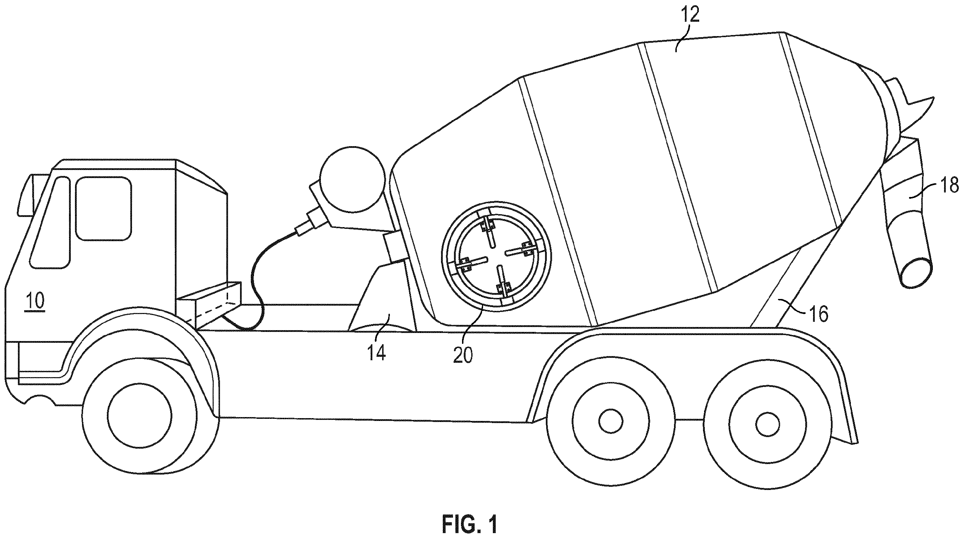

Ready-mix concrete is concrete that is manufactured in a factory or batching plant, according to a set recipe, and then delivered to work site, by truck mounted in-transit mixers. Referring to Figure 1 of the drawings, a typical in-transit mixer, mounted on a truck 10, comprises a drum 12 mounted between front and rear supports 14, 16 on the rear flatbed of the truck. The drum 12 has a longitudinal axis A and is mounted at an angle with its axis A around 10-15° relative to the horizontal axis defined by the flatbed. The drum 12 is closed at the lower end (nearest the truck chassis 10a) and has an opposing open end, and the assembly includes, at least in some cases, a feed-in/feed-out device 18 for feeding concrete into, and removing concrete from, the drum 12 via the open end.

The drum 12, conventionally, has a number of blades which are attached to the inner surface of the drum so as to form one or more helices that run the length of the drum, wherein the drum is used to agitate and mix the components of a concrete mixture. These components are abrasive and can wear the blades and drum. Therefore, it is desirable to perform periodic inspections of the inside of the drum to ensure that it is still serviceable and does not require repair. It is, therefore, desirable, to be able to gain access thereto to facilitate repairs if they are needed. In addition, it is periodically necessary to clean the inside of the drum, and this again requires access thereto.

To facilitate entry to the inside of the drum it is known to provide man access entries 20 within the wall of the drum which can be covered during normal operation of the mixer. Some prior art covers for access entries are bolted by a plurality of bolts, which can be time consuming to remove. Whilst such attachment allows the cover to withstand high, pulsing loads, the covers for such access entries are not as convenient as may be desired, and it is not unknown for workers to slide into the drum via the open end thereof rather than remove all of the bolts retaining the cover to expose the access entry. This can place the worker into a dangerous situation since there is no easy route out of the drum, and there is no quick way of recovering a worker that may be injured or otherwise incapacitated.

It is a further consideration that any cover to the man access entry should not extend beyond the surface of the drum, which is caused to rotate during normal operation thereof. This is a safety requirement to try and ensure that objects and/or workmen are not caught and damaged/injured by protrusions from the drum as it rotates.

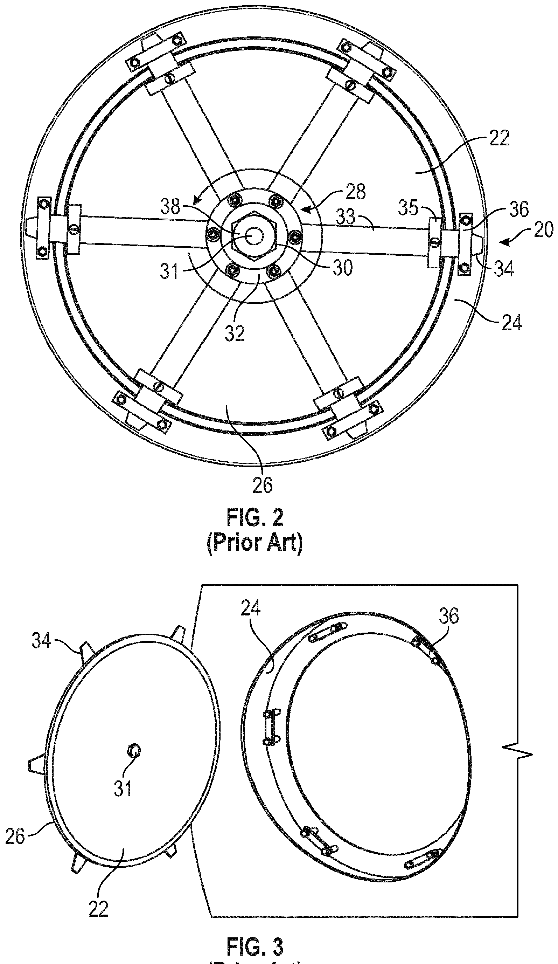

Referring to Figures 2 and 3 of the drawings, a well known man access entry 20 comprises a latched cover 22 and a circular insert 24. The latched cover 22 comprises a substantially flat metal disc 26 to which a latching mechanism 28 is bolted. The latching mechanism 28 comprises a generally central nut and bolt assembly. The bolt assembly comprises a central nut 30 mounted over a screw 31 and coupled to a concentric profiled actuating disc 32. Each of a set of elongate locking arms 33 is bolted, at one respective end, to the actuating disc 32, and extends radially outward therefrom to the peripheral edge of the flat metal disc 26. The outer end of each locking arm has opposing bevelled edges to form a respective locking portion 34. A set of retaining members 35 is provided in spaced apart relation at the peripheral edge of the metal disc 26, each retaining member 35 comprising a housing defining a slot therein and being positioned on the disc 26 such that a respective locking arm 33 extends therethrough and the locking portion thereof extends beyond the edge of the disc 26 in the latching position illustrated.

The circular insert 24 is located within an access aperture in the side wall of the drum and provides a platform on which a set of sockets 36 are equi-angularly positioned. Each socket 36 comprises a pair of outwardly extending legs, across which is bolted a bar so as to define a socket portion therebelow.

In use, the cover 22 is placed over the access aperture in which the insert 24 is located, such that the locking portions 34 of the locking arms are each aligned with a respective socket 36. The actuating disc 32 is rotated by rotating the central nut 30 so as to draw the locking arms 33 back in the general direction of the centre of the metal disc 26. As a result, the locking portions 34 are retracted to a position within the periphery of the flat metal disc 26, thereby allowing the cover 22 to be fully inserted into the insert 24. When the actuating disc is then rotated in the opposite direction (or released if biased in the opposite direction), the locking arms 33 move back to the locking position, with the locking portions 34 thereof within the socket portion of a respective socket 36, thereby retaining the cover within the insert and over the access aperture. In this configuration, the cover 22 and all parts of the locking mechanism are located within the recess, and no part thereof protrudes beyond the perimeter defined by the outer surface 25 of the drum body. A central bolt 38 is mounted on the screw 31 which, when tightened, engages with the central nut 30 and applies pressure thereto, thereby preventing further rotation of the actuating disc 32, thus locking the cover in place. If it is required to remove the cover 22 to gain access to the drum, the central bolt is loosened, to release the pressure, and the actuating disc 32 is rotated by rotation of the central nut 30, so as to retract the locking arms from the sockets and allow the cover 22 to be removed.

Quick-opening drum hatch assemblies of the type described above have been known since the 1940s. The original concept was devised and developed, initially, by the Chain Belt Company, later known as Rex Chainbelt. Rex Chainbelt sold its Construction Machinery Division (including Truck Mixers) to Rexworks, Inc., and Rexworks, Inc. continued to use four- and six-bar versions of the drum hatch assembly described above until they sold the Truck Mixer product line to another company in 1992. As shown in the photographs attached hereto as Appendix A, it can be clearly seen that the quick-opening drum hatch assemblies incorporated in 'Rex' Mixer Trucks (therefore, prior to 1992), comprised a drum hatch located in a recess in the drum body, wherein no part of the hatch or locking mechanism protrudes beyond the perimeter defined by the outer surface of the drum body. The configuration of the four-bar version they used can be seen in greater detail in the Rexworks Manual extract attached hereto as Appendix B.

Since then, and to the present day, various versions of the above-described quick-opening drum hatch assembly have been in widespread use. For further examples of the four-bar version, see the T.L. Smith Machine Co. ,annual extract (dated June 2000), attached hereto as Appendix C, and the T.L Smith Machine Co. manual extract (pages 36 and 37) from 1977, attached hereto as Appendix D. In all cases, and as explained above, the assemblies are designed to ensure that no part of the man access entry cover or locking mechanism extends beyond the surface of the drum (when in the closed configuration). This is a safety requirement to try and ensure that objects and/or workmen are not caught and damaged/injured by protrusions from the drum as it rotates.

Whilst the above-described assembly addresses some of the issues referenced above, there are still some problems associated therewith. Firstly, the cover 22 is relatively heavy, and manoeuvring it into the correct position within the insert over the access entry aperture can be difficult and cause injury to an operative. Furthermore, there is some 'play' within the retaining members 35, between the inner edges of the slot and the respective locking arm retained therein. Thus, when the cover is lifted into the insert, some of the locking arms fall forward (i.e. toward the access entry aperture when oriented for use) within the retaining member slots, such that they cannot be correctly aligned with respective sockets without human intervention: a worker must manually push the locking arms back within the respective retaining member slot by hand, which carries a danger that the user will trap their fingers or otherwise be injured, especially as this procedure must be performed with one hand whilst holding the cover with the other hand. Still further, the cover can become stuck within the access entry aperture due to a build up of cementitious material in the small gap between the cover and the insert.

It is an object of aspects of the present invention to address at least some of these issues. In accordance with a first aspect of the present invention, there is provided an access entry closure assembly for a drum of a concrete mixer or agitator, the assembly comprising a door member and an insert, the door member comprising a plate having mounted thereon a latching mechanism, the latching mechanism comprising a plurality of locking arms wherein each locking arm is coupled, at a proximal end, to an actuating member and extends substantially radially outwardly toward a peripheral edge of said plate, a distal end of each locking arm extending beyond the peripheral edge of said plate when in a locking position, the actuating member being arranged and configured, when actuated, to cause linear movement of said locking arms in a direction away from said peripheral edge of said plate so as to retract said distal ends thereof, each locking arm being retained in a retaining member defining a slot through which a respective locking arm extends, and each retaining member being mounted or otherwise provided on said plate and including a biasing member configured to engage a respective locking member retained therein and bias said respective locking member toward said plate.

In an exemplary embodiment of the present invention, the assembly may include an insert shaped and dimensioned to fit within an access entry aperture in said drum and define a collar therein. The collar may be provided with a plurality of receiving members, each receiving member being configured to receive and retain a distal end of a respective locking member when in said locked configuration.

As described above, the latching mechanism of the prior art access entry closure assembly is entirely exposed, which carries a danger that the user will trap their fingers or otherwise be injured if they manually manipulate the locking arms. Furthermore, the latching mechanism is fully exposed to the elements and can, therefore, be subject to deterioration or damage from moisture and debris within the environment. Thus, in accordance with a second aspect of the present invention, there is provided an access entry closure assembly for a drum of a concrete mixer or agitator, the assembly comprising a door member and an insert, the door member comprising a plate having mounted thereon a latching mechanism including an actuating member arranged and configured to move said latching mechanism between locked and unlocked positions, the assembly further comprising a substantially smooth outer cover mounted or otherwise provided on said plate, said cover being shaped and dimensioned to substantially cover said plate including said latching mechanism in said locked position, said cover including an aperture positioned and configured to permit access to said actuating member when said cover is in situ on said plate.

Similarly, in an exemplary embodiment of the first aspect of the invention, a substantially smooth cover may be mounted or otherwise provided over said plate, said cover being shaped and dimensioned to substantially cover said plate including said latching mechanism. The cover may be shaped and dimensioned to fit within said insert so as to substantially abut the peripheral edge of an access entry aperture in said drum. A cover may be mounted or otherwise provided over said plate, said cover being shaped and dimensioned to fit within and substantially abut the peripheral edges of the above-mentioned collar. The diameter of said cover may, in some exemplary embodiments, be greater than that of said plate, and the inner side edge of said collar defines a channel or recess for receiving a peripheral edge of said cover when the assembly is in a closed configuration.

Thus, aspects and embodiments of the invention include a substantially smooth outer cover, affixed to, integrally formed with or otherwise permanently mounted on the plate so as to substantially cover the latching mechanism, both for cosmetic purposes and to conceal the latching mechanism and recess. When the actuating member is accessed and employed to release the latching mechanism, the plate and the cover can be opened or removed simultaneously to expose the drum access entry, thereby reducing the time required to gain such access and eliminating any need to handle and manipulate the cover and plate separately.

The cover may include one or more jacking points for receiving an elongate jacking device such that, in use, said jacking device can be inserted through a respective jacking point and extend toward an edge of an access entry aperture or said collar. The cover may include one or more slots for receiving a prying device. The cover may comprise a generally central aperture for accommodating said actuating member and, in use, allowing access thereto. In this case, a removable bung or plug member may be provided that is configured for insertion in said aperture to cover said actuating member when not in use.

In an exemplary embodiment, the biasing member may comprise a plunger device extending from an upper wall of said retaining member toward a respective locking member, said plunger device being spring biased toward said plate. However, it will be appreciated that the biasing member may comprise other suitable means to bias the respective locking member toward the plate. For example, the biasing member may comprise an extension spring member (if provided at the front of the locking arm) or compression spring member (if provided at the rear of the locking arm) formed of a resiliently flexible, extendable or compressible material, configured to impose a biasing load on the respective locking member toward the plate. In yet another exemplary embodiment, each retaining member may comprise a chamfered or otherwise profiled edge against which a respective locking member is biased, the chamfered or profiled edge of said retaining member being configured to guide the distal end of said locking member during said linear movement thereof. In one exemplary embodiment, the profiled or chamfered edge defines a progressively restrictive retaining member slot.

The door member may comprise a hinge bracket and is thereby hingedly connected to an insert shaped and dimensioned to fit within an access entry aperture in said drum and define a collar therein.

The actuating member may comprise a rotatable plate to which said proximal end of each said locking member is coupled such that rotation of said plate causes longitudinal movement of said locking members between said locking position and a retracted position.

In accordance with another aspect of the present invention, there is provided a drum for a concrete mixer or agitator, said drum having an access entry aperture in a side wall thereof, and comprising an access entry closure assembly substantially as described above, wherein said assembly comprises an insert shaped and dimensioned to fit within said access entry aperture in said drum and define a collar therein.

In accordance with yet another aspect of the present invention, there is provided an in-transit mixer including a drum substantially as described above.

These and other aspects of the present invention will be apparent from the following specific description, in which embodiments of the present invention are described, by way of examples only and with reference to the accompanying drawings, in which:
Figure 1 is a schematic side view of a typical truck mounted in-transit mixer;
Figure 2 is a schematic plan view of an access entry closure assembly according to the prior art;
Figure 3 is a schematic perspective view of the access entry closure assembly of Figure 2;
Figure 4 is a schematic plan view of an access entry closure assembly according to an exemplary embodiment of the present invention;
Figure 5 is a schematic close-up perspective view of a portion of a latching arm, together with a retaining member and socket of the assembly of Figure 4;
Figure 6 is a schematic perspective view of a door member of the assembly of Figure 4;
Figure 7 is a schematic perspective view of an access entry closure assembly according to an exemplary embodiment of the present invention, when in an open configuration;
Figure 8 is a schematic perspective view of an access entry closure assembly according to an exemplary embodiment of the present invention, when in a closed configuration; and
Figure 9 is a schematic view of the assembly of Figure 8, illustrating a tool for use in actuating the locking mechanism thereof.

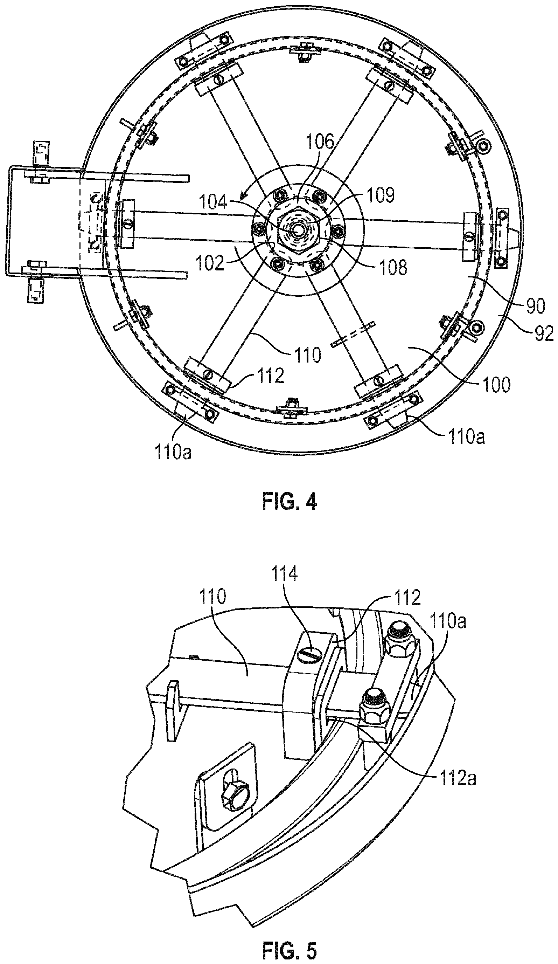

Referring to Figure 4 of the drawings, an access entry closure assembly according to an exemplary embodiment of the present invention comprises an access door 90 and an insert member 92. The access door 90 comprises a substantially flat metal plate 100 having a central aperture 102, in which is received a screw 104. A profiled actuating plate 106 is concentrically mounted on the screw 104 and coupled to a central nut 108. A centre bolt 109 is concentrically mounted on the screw 104 and configured to selectively engage and lock the nut 108, in use.

A plurality of elongate latching arms 110 is provided, wherein a proximal end of each of the latching arms 110 is bolted or otherwise coupled, in spaced apart relation, to the actuating plate 106, around its periphery. The latching arms 110 extend radially from their respective connection to the actuating plate 106 toward the peripheral edge of the metal plate 100, such that the latching arms are substantially equi-angularly spaced around the metal plate 100. Each latching arm 110 has, at its distal end, a locking portion 110a defined by bevelled opposing side edges. Rotation of the actuating plate 106 in a first direction, by rotation of the central nut 108 in that direction, causes longitudinal movement of the latching arms 110 from a first, locking configuration, in which the locking portions 110a extend beyond the peripheral edge of the metal plate 100, to a second, unlocked configuration, in which the locking portions 110a of the latching arms 110 are in a retracted position within the periphery of the metal plate 100. Rotation of the actuating plate 106 in the opposite direction causes longitudinal movement of the latching arms 110 back from the unlocked configuration to the locked configuration. Such rotation in the opposite direction may be manually effected or it may be as a result of releasing the central nut 108 which is spring biased to return to the locked configuration.

Each latching arm 110 is retained, i.e. prevented from lateral movement relative to the metal plate 100, by a respective retaining member 112. Each retaining member 112 comprises a housing having an elongate slot 112a defined therein (see Figure 5), shaped and configured to allow a respective latching arm 110 to extend therethrough (longitudinally) and with sufficient clearance to allow the latching arm to slide freely back and forth therein. It is, however, this clearance that causes some of the issues highlighted above in relation to the prior art. Thus, in accordance with an exemplary embodiment of the present invention, and referring additionally to Figure 5 of the drawings, each retaining member 112 has an aperture in the upper wall thereof, within which is mounted a sprung ball plunger 114 (comprising a grub screw, a spring and a ball bearing) that extends into the retaining member housing and engages with the upper surface of a respective latching arm 110 retained therein. The plunger 114 is arranged and configured to apply a permanent spring bias against the respective latching arm 110 toward the lower wall of the respective retaining member 112 (i.e. in the direction toward the metal plate 100). Thus, irrespective of whether the latching arms 110 are in the locking or unlocked configuration, each latching arm 110 is spring biased against the lower wall of the respective retaining member 112, thereby ensuring that it is always in correct lateral as well as longitudinal alignment for locking or latching the access entry.

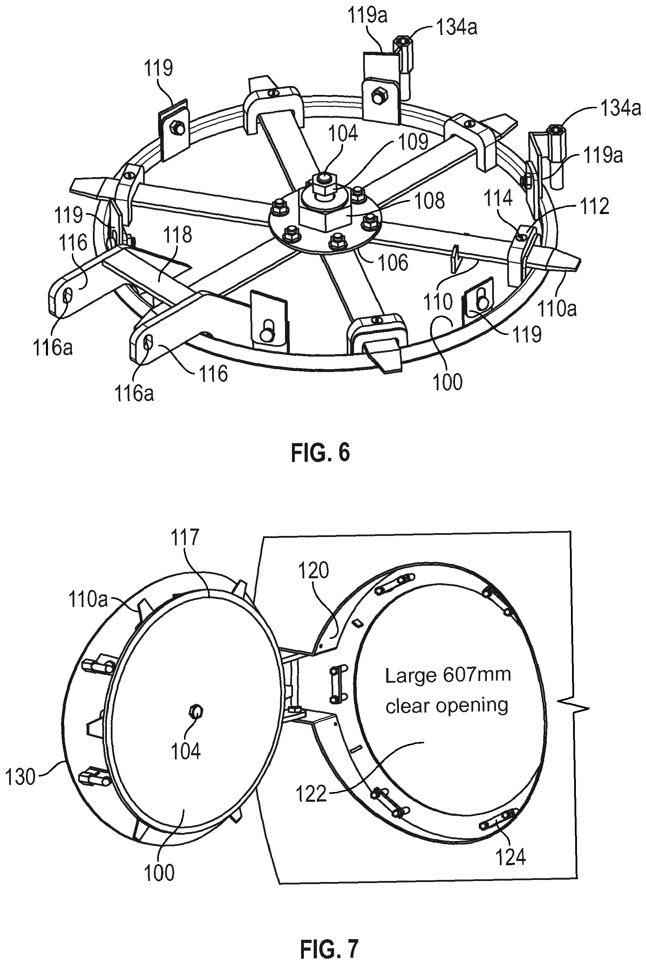

Referring additionally to Figure 6, the access door 90 further comprises door hinge comprising a pair of opposing door hinge plates 116 with a cross bar 118 therebetween. Each of the door hinge plates 116 is provided with an aperture 116a at its distal end. A rubber 'o' ring seal 117 (see Figure 7) is provided within a recessed lip on the 'inner' surface of the plate 100.

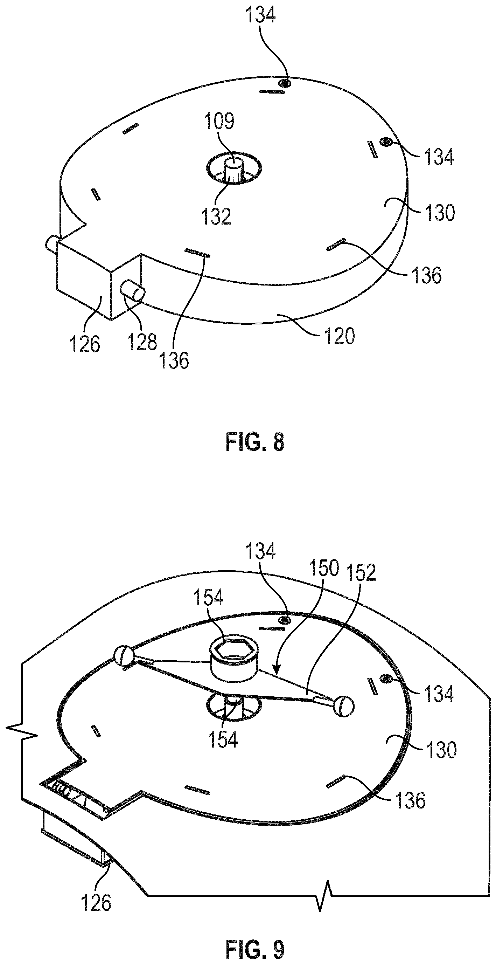

Referring additionally to Figure 7 of the drawings, the insert member 92 comprises a generally circular collar 120, shaped and dimensioned to fit within the access entry opening 122 in a side wall of the drum. A plurality of equi-angularly spaced socket members 124 is provided on the outwardly facing surface of the collar (in situ), each socket member 124 comprising a pair of spaced apart, substantially parallel leg portions with a cross bar therebetween, to define a retaining slot shaped and dimensioned to receive, in use, the locking portion of a respective latching arm 110 when in the locking configuration. As can be seen more clearly in Figure 8 of the drawings, the collar 120 has a substantially rectangular hinge surround portion 126 formed integrally therewith, to accommodate the hinge plates 116, and a pair of hinge pins 128 is provided to hingedly couple the hinge plates 116 to the hinge surround portion 126, such that the door can be manually opened and closed relative to the access entry opening 122 in the manner of a conventional hinged door.

In use, and from the open position, the door 90 can be manually swung to the closed position over the access entry opening. Next the central nut 108 is rotated to rotate the actuating plate 106 and retract the latching arms 110, so that the door 90 can be fully pushed against the facing edge of the collar 120. When the central nut 108 is either released or rotated in the opposite direction, move longitudinally back to the locking configuration, such that the locking portions at the end thereof slide under the cross bar of the socket members 124 for retention thereby. The central bolt 109 is then tightened in order to apply engaging pressure to the central nut 108 and, thus, the actuating plate 106 to prevent rotation thereof. When it is required to open the access entry opening, the central bolt 109 must be loosened, to release the pressure, and then the central nut 108 can be rotated to retract the latching arms 110 and release them from the socket members 124, following which the door 90 can be opened. Referring to Figure 9 of the drawings, a tool 150 may be provided that comprises an elongate handle portion 152 and a pair of generally central, opposing socket portions 154. The socket portion on one side is shaped and dimensioned to enable a user to loosen the central bolt 109, and the socket portion on the opposing side is configured to enable a user to conveniently rotate the central bolt 108, as required.

As the latching arms 110 are biased toward the metal plate 100 of the door, they are permanently held in the required alignment for this locking procedure to occur without the need for additional operator intervention. Therefore, and referring particularly to Figure 8 of the drawings, it is possible, in an exemplary embodiment of the invention, to provide a smooth cover 130 over the metal plate 100 and latching arms 110 for additional safety, as well as protection for the moving parts of the mechanism. The cover 130 is shaped and configured to fit completely over the metal plate 100, and is welded and/or bolted thereto. Referring back to Figure 6 of the drawings, a set of peripheral, upstanding lugs 119 is provided on the outer surface of the plate 100, to which the cover 130 can be welded. The cover 130, which is welded and/or bolted to the metal plate 100, is shaped and dimensioned to fit within the recess defined by the collar 120 including the hinge surround portion 126. A peripheral seal may be provided between the edges of the cover 130 and the collar 120 to prevent the ingress of moisture and/or debris that may damage the latching mechanism beneath. A generally central aperture 132 is provided in the cover 130 to accommodate, and allow access to, the central nut 108 and bolt 109. A plug-like, removable cover (not shown) may be provided for insertion into the central aperture 132, to cover the central nut 108 and bolt 109 when not required for use. In the exemplary embodiment illustrated, the plate 100 and the cover 130 are of substantially the same diameter and shaped and dimensioned to fit within the access entry aperture provided in the side wall of a mixer drum. However, in alternative embodiments, the cover 130 may have a diameter greater than that of the plate 100 (which is dimensioned to fit within the collar which, in turn, is shaped and dimensioned to fit within the access entry aperture). In this case, the collar may define in its side wall a lip or channel for receiving a peripheral edge of the cover, when in the closed configuration. The side edge of the access entry aperture may be profiled to accommodate the resultant larger diameter portion of the collar, as required.

As described above, if there is a build up of cementitious material within the drum behind the access entry opening, the door 90 may become stuck shut. In conventional access entry door/cover assemblies, when this occurs, it I known for a user to simply strike the door/cover with a hammer or similar tool in order to break the seal and open the access entry. However, this is not ideal as it may cause damage to the assembly, and injury to the user. In an exemplary embodiment of the present invention, this issue is addressed by the provision of one or more jacking points 134 provided in the cover. Such jacking points 134 essentially comprise screw holes aligned with coupling nuts 134a (see Figure 6) extending from a peripheral edge of the plate 100 (and mounted thereon via lugs 119a), the jacking points 134 being configured to receive a grub screw or similar projecting device, such that it extends to the facing edge of the collar 120. As the screw is wound into the hole, it comes into contact with the above-mentioned facing edge of the collar such that further screwing action will have the effect of applying an outward force to the cover (attached to the door) and, when the force is sufficient to overcome the sticking force crated by the above-mentioned build up of cementitious material, the door will effectively be prised open. Alternatively or in addition, one or more elongate slots 136 may be provided in the cover 130 to accommodate the insertion of a pry bar or similar tool to enable the door to be pried open if required.

It will be apparent to a person skilled in the art, from the foregoing description, that modifications and variations can be made to the described embodiments without departing from the scope of the invention as defined by the appended claims.

## Claims

1. An access entry closure assembly for a drum of a concrete mixer or agitator, the assembly comprising a door member and an insert, the door member comprising a plate having mounted thereon a latching mechanism, the latching mechanism comprising a plurality of locking arms wherein each locking arm is coupled, at a proximal end, to an actuating member and extends substantially radially outwardly toward a peripheral edge of said plate, a distal end of each locking arm extending beyond the peripheral edge of said plate when in a locking position, the actuating member being arranged and configured, when actuated, to cause linear movement of said locking arms in a direction away from said peripheral edge of said plate so as to retract said distal ends thereof, each locking arm being retained in a retaining member defining a slot through which a respective locking arm extends, and each retaining member being mounted or otherwise provided on said plate and including a biasing member configured to engage a respective locking member retained therein and bias said respective locking member toward said plate.

2. An assembly according to claim 1, including an insert shaped and dimensioned to fit within an access entry aperture in said drum and define a collar therein.

3. An assembly according to claim 2, wherein said collar is provided with a plurality of receiving members, each receiving member being configured to receive and retain a distal end of a respective locking member when in said locking position.

4. An access entry closure assembly for a drum of a concrete mixer or agitator, the assembly comprising a door member and an insert, the door member comprising a plate having mounted thereon a latching mechanism including an actuating member arranged and configured to move said latching mechanism between locked and unlocked positions, the assembly further comprising a substantially smooth outer cover mounted or otherwise provided on said plate, said cover being shaped and dimensioned to substantially cover said plate including said latching mechanism in said locked position, said cover including an aperture positioned and configured to permit access to said actuating member when said cover is in situ on said plate.

5. An assembly according to claim 4, wherein the latching mechanism comprises a plurality of locking arms wherein each locking arm is coupled, at a proximal end, to an actuating member and extends substantially radially outwardly toward a peripheral edge of said plate, a distal end of each locking arm extending beyond the peripheral edge of said plate when in a locking position, the actuating member being arranged and configured, when actuated, to cause linear movement of said locking arms in a direction away from said peripheral edge of said plate so as to retract said distal ends thereof, each locking arm being retained in a retaining member defining a slot through which a respective locking arm extends, and each retaining member being mounted or otherwise provided on said plate and including a biasing member configured to engage a respective locking member retained therein and bias said respective locking member toward said plate.

6. An assembly according to claim 5, including an insert shaped and dimensioned to fit within an access entry aperture in said drum and define a collar therein.

7. An assembly according to claim 6, wherein said collar is provided with a plurality of receiving members, each receiving member being configured to receive and retain a distal end of a respective locking member when in said locking position.

8. An assembly according to any of claims 1 to 3, wherein a substantially smooth cover is mounted or otherwise provided over said plate, said cover being shaped and dimensioned to substantially cover said plate including said latching mechanism.

9. An assembly according to any of claims 6 to 8, wherein said cover is shaped and dimensioned to fit within said insert so as to substantially abut the peripheral edge of an access entry aperture in said drum.

10. An assembly according to claim 2, claim 3, claim 6 or claim 7, wherein a cover is mounted or otherwise provided over said plate, said cover being shaped and dimensioned to fit within and substantially abut the peripheral edges of said collar.

11. An assembly according to claim 2, claim 3, claim 6 or claim 7, a cover is mounted or otherwise provided over said plate, the diameter of said cover being greater than that of said plate, and the inner side edge of said collar defining a channel or recess for receiving a peripheral edge of said cover when the assembly is in a closed configuration.

12. An assembly according to any of claims 4 to 11, wherein said cover includes one or more jacking points for receiving an elongate jacking device such that, in use, said jacking device can be inserted through a respective jacking point and extend toward an edge of an access entry aperture or said collar.

13. An assembly according to any of claims 4 to 12, wherein said cover includes one or more slots for receiving a prying device.

14. An assembly according to any of claims 4 to 13, wherein said cover comprises a generally central aperture for accommodating said actuating member and, in use, allowing access thereto.

15. An assembly according to claim 14, comprising a removable bung or plug member configured for insertion in said aperture to cover said actuating member when not in use.

16. An assembly according to any of the preceding claims, when dependent on claim 1 or claim 5, wherein the biasing member comprises a plunger device extending from an upper wall of said retaining member toward a respective locking member, said plunger device being spring biased toward said plate.

17. An assembly according to any of claims 2 to 15, when dependent on claim 1 or claim 5, wherein the biasing member comprises an extension spring member or compression spring member formed of a resiliently flexible, extendable or compressible material, configured to impose a biasing load on the respective locking member toward the plate.

18. An assembly according to any of claims 2 to 15, when dependent on claim 1 or claim 5, wherein each retaining member comprises a chamfered or otherwise profiled edge against which a respective locking member is biased, the chamfered or profiled edge of said retaining member being configured to guide the distal end of said locking member during said linear movement thereof.

19. An assembly according to claim 18, wherein the profiled or chamfered edge defines a progressively restrictive retaining member slot.

20. An assembly according to any of the preceding claims, wherein the door member comprises a hinge bracket and is thereby hingedly connected to an insert shaped and dimensioned to fit within an access entry aperture in said drum and define a collar therein.

21. An assembly according to any of the preceding claims, when dependent on claim 1 or claim 5, wherein the actuating member comprises a rotatable plate to which said proximal end of each said locking member is coupled such that rotation of said plate causes longitudinal movement of said locking members between said locking position and a retracted position.

22. An access entry closure assembly substantially as herein described and/or with reference to Figures 4 to 9 of the drawings.

23. A drum for a concrete mixer or agitator, said drum having an access entry aperture in a side wall thereof, and comprising an access entry closure assembly according to any of the preceding claims, wherein said assembly comprises an insert shaped and dimensioned to fit within said access entry aperture in said drum and define a collar therein.

24. An in-transit mixer including a drum according to claim 23.
